# EUROPÄISCHE PATENTSCHRIFT

(11) **EP 3 803 304 B1**
(45) Veröffentlichungstag und Bekanntmachung des Hinweises auf die Patenterteilung: **10.05.2023**
(21) Anmeldenummer: 19726989.7
(22) Anmeldetag: 27.05.2019
(51) Int. Cl.: G01L 3/10

(54) **DREHMOMENTSENSOREINHEIT MIT EINGEPRESSTER SENSOREINHEIT**
TORQUE SENSOR UNIT WITH PRESSED-IN SENSOR UNIT
UNITÉ DE CAPTEUR DE COUPLE À UNITÉ DE CAPTEUR ENFONCÉE

(30) Priorität: 29.05.2018 DE 102018112840
(43) Veröffentlichungstag der Anmeldung: 14.04.2021
(73) Patentinhaber: thyssenkrupp Presta AG, 9492 Eschen (LI); thyssenkrupp AG, 45143 Essen (DE)
(72) Erfinder: KNOLL, Peter, 88131 Lindau (DE); MÜNSTER, Andreas, 88138 Weissensberg (DE); SZABO, Peter, 1119 Budapest (HU)
(74) Vertreter: thyssenkrupp Intellectual Property GmbH
(86) Internationale Anmeldenummer: PCT/EP2019/063594
(87) Internationale Veröffentlichungsnummer: WO 2019/228952

(56) Entgegenhaltungen:
- EP-A2- 1 584 908
- EP-A2- 1 783 034
- US-A1- 2003 167 857
- US-A1- 2008 295 612

## Beschreibung

Die vorliegende Erfindung betrifft eine Drehmomentsensoreinheit mit den Merkmalen des Oberbegriffs des Anspruchs 1, insbesondere für eine elektromechanische Hilfskraftlenkung eines Kraftfahrzeuges, und ein Verfahren zur Montage einer Drehmomentsensoreinheit für eine elektromechanische Hilfskraftlenkung.

Drehmomentsensoren weisen herkömmlicherweise einen Drehwinkelsensor auf. Hierbei werden zwei gegeneinander begrenzt verdrehbare Wellenteile über eine Torsionsfeder elastisch miteinander gekoppelt. Wenn ein Wellenteil durch ein vom Fahrer des Fahrzeugs aufgewendetes Drehmoment gegen den anderen Wellenteil verdreht wird, ist der relative Drehwinkel im Wesentlichen proportional zum eingeleiteten Drehmoment. Für eine genaue Bestimmung des Drehmoments ist es wichtig, den Drehwinkel präzise messen zu können.

In der Druckschrift EP 1 783 034 A2 wird offenbart, den relativen Drehwinkel bei einem Lenksystem mit Kodierelementen durch optische, magnetische, kapazitive und/oder induktive Prinzipien zu erfassen. Aus dem erfassten Winkelversatz zwischen den Kodierelementen ist es möglich, ein an dem Lenkrad und der Lenkwelle anliegendes Drehmoment zu bestimmen.

Ein weiterer Drehmomentsensor ist beispielsweise aus der Offenlegungsschrift DE 10 2007 043 502 A1 bekannt. An der oberen Lenkwelle ist dabei ein Ringmagnet angeordnet, während auf der unteren Lenkwelle ein Halter mit einem magnetischen Stator angebracht ist, welcher dem Dauermagneten in radialer Richtung über einen kleinen Luftspalt gegenüberliegt. Über den Stator, welcher üblicherweise aus zwei separaten Statorteilen besteht, wird der magnetische Fluss des Magneten hin zu einem ersten und einem zweiten Flussleiter geleitet, welche dann den magnetischen Fluss an einen Magnetsensor - beispielsweise einen Hall-Sensor - abgeben.

Die Offenlegungsschrift DE 10 2004 055 124 A1 offenbart einen Drehmomentsensor, wobei der Sensor mit dem Halter über eine Schraubverbindung verbunden ist. Als nachteilig erweist sich diese Lösung dahingehend, dass durch das Verschrauben der Komponenten eine große Anzahl an Einzelteilen notwendig ist. Des Weiteren wird das Herstellungsverfahren verkompliziert, da Schrauben Bearbeitungsgänge, wie Gewindebohren, und das Anziehen der Schrauben benötigen.

Aus der Druckschrift US 2003/0167857 A1 ist zudem ein Drehmomentsensor bekannt, der einen Torsionsstab umfasst, der an seinen gegenüberliegenden Enden mit einer ersten Welle und einer zweiten Welle verbunden ist. Weiter umfasst der Drehmomentsensor einen mehrpoligen Magneten, der an der ersten Welle befestigt ist, und ein mehrpoliges Joch, das als Magnetflussleiter an der zweiten Welle befestigt ist. Mit einem Magnetflusskollektor wird der magnetische Fluss von dem mehrpoligen Joch gesammelt, wobei ein magnetischer Sensor des Drehmomentsensors die magnetische Feldstärke erfasst. Der Magnetflusskollektor und der magnetische Sensor sind dabei jeweils als ein Teil gegossen, wobei der Magnetflusskollektor eine Aufnahme mit Rasthaken umfasst, um den Sensor formschlüssig aufnehmen zu können.

Es ist eine Aufgabe der vorliegenden Erfindung, einen gattungs-gemäßen Drehmomentsensor vorzuschlagen, der einfacher zu fertigen ist. Außerdem ist es Aufgabe der vorliegenden Erfindung, ein besonders einfaches Verfahren zur Herstellung eines von einem Gehäuse umgebenen Drehmomentsensors zu schaffen.

Diese Aufgabe wird von einer Drehmomentsensoreinheit mit den Merkmalen des Anspruchs 1 und von einem Verfahren mit den Merkmalen des Anspruchs 13 gelöst. Vorteilhafte Weiterbildungen ergeben sich aus den Unteransprüchen.

Demnach ist eine Drehmomentsensoreinheit umfassend:
- einen drehfest mit einer ersten Teilwelle verbindbaren Ringmagneten und einen mit einer zweiten Teilwelle verbindbaren Magnetflussleiter,
- eine Sensoreinheit mit einem ersten Gehäuse, die eine Drehwinkeländerung zwischen den Teilwellen detektiert,
- ein zweites Gehäuse, dass den Ringmagneten und den Magnetflussleiter umgibt, und das mit dem ersten Gehäuse der Sensoreinheit fest verbunden ist, vorgesehen, wobei das zweite Gehäuse der Drehmomentsensoreinheit eine Gehäuseöffnung aufweist, in die das erste Gehäuse der Sensoreinheit zur Ausbildung einer kraftschlüssigen Verbindung eingepresst ist, wobei die Gehäuseöffnung eine erste Profilierung an wenigstens zwei Seitenflächen aufweist.

Der Drehmomentsensor wird somit ohne Schraubverbindung mit der Sensoreinheit fest verbunden werden, was den Herstellungsprozess deutlich vereinfacht.

Besonders bevorzugt wird durch das Einpressen des ersten Gehäuses und damit der Sensoreinheit in das zweite Gehäuse eine Verbindung, welche ausschließlich durch Kraftschluss gebildet wird, bereitgestellt.

Weiterhin ist es denkbar und möglich, dass eine zusätzliche stoffschlüssige Verbindung unter Verwendung eines Klebstoffs oder Kits zur Abdichtung vorgesehen ist.

Vorzugsweise umfasst die Sensoreinheit einen Magnetflussleiter und einen auf einer Leiterplatte angeordneten Magnetsensor. Bevorzugt sind die Magnetflussleiter so zueinander ausgerichtet, dass der Magnetfeldsensor mittig zu dem Ringmagneten angeordnet ist.

Gemäß der beanspruchten Erfindung weist die Gehäuseöffnung eine erste Profilierung an wenigstens zwei Seitenflächen auf, wobei die wenigstens zwei Seitenflächen sich vorteilhafterweise gegenüber liegen und sich parallel zur Längsachse der Teilwellen erstrecken. Dabei ist es bevorzugt, wenn das erste Gehäuse der Sensoreinheit eine auf den wenigstens zwei Seitenflächen der Gehäuseöffnung korrespondierenden Außenflächen angeordnete zweite Profilierung aufweist. Bevorzugt sind die erste und zweite Profilierung wellenförmig oder als eine Verzahnung ausgebildet. Die eine Profilierung erstreckt sich dabei bevorzugt parallel zur Längsachse der Lenkwelle. Die Rillen sind dabei in etwa senkrecht zur Längsachse als Querriffelung orientiert. Als Gegenstück ist auf den in Eingriff damit zubringende andere Profilierung ebenfalls als eine wellenförmige Profilierung ausgebildet, deren Rillen sich allerdings in Längsrichtung parallel zur Längsachse als Längsriffelung erstrecken. Es ist weiterhin denkbar und möglich, dass die erste und zweite Profilierung als parallele Querverzahnung ausgebildet sind. Die erste Profilierung kann in einem Winkel von 45° dabei bezogen auf die Längsachse angeordnet sein, während die andere Verzahnung in einem Winkel von 135° bezogen auf die Längsachse angeordnet ist. Weiterhin ist es denkbar und möglich, dass eine variable Verzahnung als erste und zweite Profilierung vorgesehen ist, also welche eine veränderbare Verzahnungsgeometrie entlang der Profilierung aufweist. Ebenfalls können die Profilierungen als Rändelung ausgebildet werden.

In einer bevorzugten Ausführungsform sind die erste und zweite Profilierung bevorzugt um einen Winkel von etwa 90° gegeneinander verdreht angeordnet. Vorzugsweise weisen die Profilierungen parallel angeordnete Rillen auf. Weiterhin ist es denkbar und möglich, dass eine Sekundärsicherung vorgesehen ist, welche verhindert, dass die Sensoreinheit in entgegengesetzte Fügerichtung herauswandern kann.

Bei dem Fügevorgang werden die Profilierungen aneinander geschoben, zur Ausbildung der kraftschlüssigen Verbindung. Dabei ist es vorteilhaft, wenn das Material, in das eine der beiden Profilierungen eingebracht wurde, eine höhere Zähigkeit aufweist, als das Material, in das die andere der beiden Profilierungen eingebracht wurde. Es ist denkbar und möglich zwischen den Profilierungen einen elastischen Dämpfer anzuordnen, um einen möglichen Verschleiß zu verhindern und Geräusche im Betrieb zu minimieren. Zum Abdichten der Profilierungen kann zwischen den Profilierungen Klebstoff, eine Beschichtung oder Kits angebracht werden.

In einer Ausführungsform weist das erste Gehäuse der Sensoreinheit einen T-förmigen Bereich mit einem Hals und einem dazu senkrecht angeordneten Steg auf. Bevorzugt ist der senkrechte oder querliegende Steg plattenförmig ausgebildet. Dabei ist es bevorzugt, wenn der Steg im eingepressten Zustand in Anlage mit einer Außenseite des zweiten Gehäuses der Drehmomentsensoreinheit liegt und die Einpresstiefe begrenzt. Der Hals des ersten Gehäuses der Sensoreinheit erweitert sich bevorzugt zum Steg hin, wobei in dem erweiterten Bereich die zweite Profilierung auf den wenigstens zwei Seitenflächen der Gehäuseöffnung aufgebracht ist. Bevorzugt greifen im eingepressten Zustand die Profilierungen zur Ausbildung der kraftschlüssigen Verbindung ineinander.

Weiterhin ist ein elektromechanisches Lenksystem für ein Kraftfahrzeug vorgesehen, aufweisend ein mit einer ersten Teilwelle verbundenes Lenkritzel, welches mit einer in einem dritten Gehäuse entlang einer Längsachse verschieblich gelagerten Zahnstange zur Lenkung von Rädern in Eingriff steht, wenigstens einen Elektromotor zur Lenkkraftunterstützung, eine zuvor beschriebene Drehmomentsensoreinheit, die zwischen einer mit dem Lenkrad verbundenen zweiten Teilwelle und der ersten Teilwelle angeordnet ist und ein vom Fahrer in das Lenkrad eingebrachtes Drehmoment erfasst.

Zudem ist ein Verfahren zur Montage einer Drehmomentsensoreinheit für eine elektromechanische Hilfskraftlenkung gemäß Anspruch 13 vorgesehen.

Diese Art der Verbindung lässt sich sehr einfach und automatisiert herstellen. Vorzugsweise umfasst das Positionieren folgende Schritte:
- Einbringen der Sensoreinheit in die Gehäuseöffnung,
- Absenken der Sensoreinheit in der Gehäuseöffnung bis die Sensoreinheit an der Gehäuseöffnung anliegt und in den Magnetflussleiter greift,
- Verfahren der Sensoreinheit in der Gehäuseöffnung zwischen zwei durch den Magnetflussleiter gebildeten Begrenzungen zur Bestimmung einer Mittenposition,
- Verfahren der Sensoreinheit in der Gehäuseöffnung zur Mittenposition.

Das Positionieren und Einpressen wird vorzugsweise von einem Roboter mit einem Greifarm vorgenommen, der die Sensoreinheit greift und dann die entsprechenden Verfahrensschritte ausführt. Der Roboter ist bevorzugt sensitiv ausgebildet. Der Greifarm greift bevorzugt die Sensoreinheit mit einer maximal zulässigen Kraft und presst diese mit einer vordefinierten Kraft in die Gehäuseöffnung ein. Die Mittenposition zwischen dem Magnetflussleiters entlang der Längsachse wird durch Erkennen der Grenzpositionen und Berechnen eines vordefinierten Abstands eingenommen.

Vorzugsweise umfasst die Sensoreinheit einen Magnetflussleiter und einen auf einer Leiterplatte angeordneten Magnetsensor.

Gemäß der beanspruchten Erfindung weist die Gehäuseöffnung eine erste Profilierung an wenigstens zwei Seitenflächen auf, wobei die wenigstens zwei Seitenflächen sich vorteilhafterweise gegenüber liegen und sich parallel zur Längsachse der Teilwellen erstrecken. Dabei ist es bevorzugt, wenn das erste Gehäuse der Sensoreinheit eine auf den wenigstens zwei Seitenflächen der Gehäuseöffnung korrespondierenden Außenflächen angeordnete zweite Profilierung aufweist.

In einer bevorzugten Ausführungsform sind die erste und zweite Profilierung bevorzugt um einen Winkel von etwa 90° gegeneinander verdreht angeordnet. vorzugsweise weisen die Profilierungen parallel angeordnete Rillen auf.

Bei dem Fügevorgang werden die Profilierungen aneinander geschoben, zur Ausbildung der kraftschlüssigen Verbindung. Dabei ist es vorteilhaft, wenn das Material, in das eine der beiden Profilierungen eingebracht wurde, eine höhere Zähigkeit aufweist, als das Material, in das die andere der beiden Profilierungen eingebracht wurde.

In einer Ausführungsform weist das erste Gehäuse der Sensoreinheit einen T-förmigen Bereich mit einem Hals und einem dazu senkrecht angeordneten Steg auf. Dabei ist es bevorzugt, wenn der Steg im eingepressten Zustand in Anlage mit einer Außenseite des zweiten Gehäuses der Drehmomentsensoreinheit liegt und die Einpresstiefe begrenzt. Der Hals des ersten Gehäuses der Sensoreinheit erweitert sich bevorzugt zum Steg hin, wobei in dem erweiterten Bereich die erste Profilierung auf den wenigstens zwei Seitenflächen der Gehäuseöffnung aufgebracht ist.

Die Drehmomentsensoranordnung ist vorzugsweise an einer Lenkwelle in einem Kraftfahrzeug angebracht und an zwei sich axial gegenüberliegenden Teilwellen der Lenkwelle befestigt und erfasst eine Drehwinkeländerung zwischen den Teilwellen.

Eine bevorzugte Ausführungsform der Erfindung wird nachfolgend anhand der Zeichnungen näher erläutert. Gleiche bzw. funktionsgleiche Bauteile sind dabei in den Figuren mit denselben Bezugszeichen versehen. Es zeigen:
- Fig. 1:: eine schematische Darstellung einer elektromechanischen Hilfskraftlenkung,
- Fig. 2:: eine räumliche Ansicht einer elektromechanischen Hilfskraftlenkung mit einem Elektromotor, einem Drehmomentsensor und einem Lenkwinkelsensor,
- Fig. 3:: eine Explosionsdarstellung des Drehmomentsensors,
- Fig. 4:: einen Längsschnitt des Drehmomentsensors in einem ersten Montageschritt,
- Fig. 5:: eine Ansicht des Drehmomentsensors mit positioniertem Magnetsensor,
- Fig. 6,7:: Längsschnitte des Drehmomentsensors bei der Ausrichtung des Magnetsensors in Längsrichtung,
- Fig. 8:: eine Ansicht des Drehmomentsensors mit ausgerichtetem Magnetsensor,
- Fig. 9:: einen Längsschnitt des Drehmomentsensors in einem letzten Montageschritt,
- Fig. 10:: eine räumliche Darstellung des auf der Lenkwelle angeordneten Drehmomentsensors,
- Fig. 11:: einen Längsschnitt durch die Anordnung der Figur 10, sowie
- Fig. 12 - 16:: schematische Darstellungen der Montage des Drehmomentsensors mittels eines Roboters.

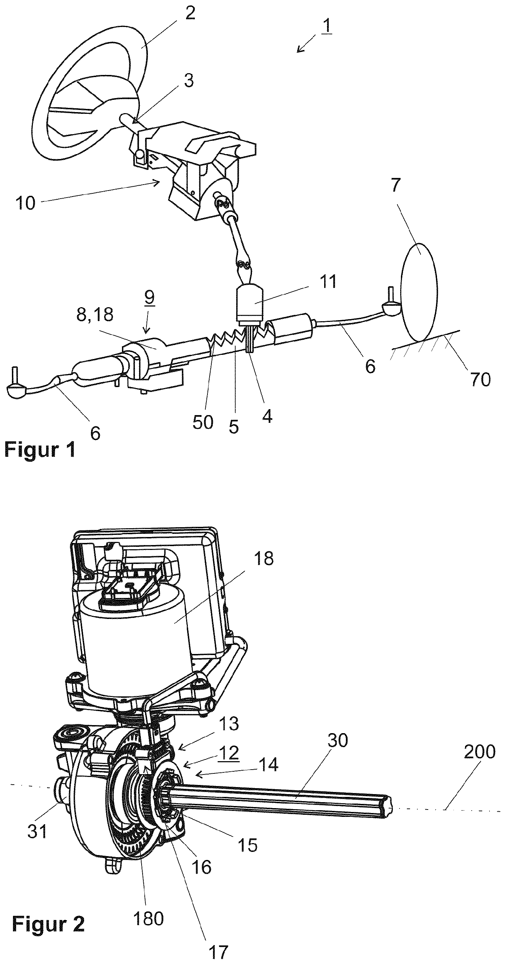

In der Figur 1 ist eine elektromechanische Kraftfahrzeugservolenkung 1 mit einem Lenkrad 2, das mit einer Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die Lenkwelle 3 auf ein Lenkritzel 4 übertragen. Das Ritzel 4 kämmt in bekannter Weise mit einem Zahnsegment 50 einer Zahnstange 5. Das Lenkritzel 4 bildet zusammen mit der Zahnstange 5 ein Lenkgetriebe. Die Zahnstange 5 ist in einem dritten Lenkungsgehäuse in Richtung ihrer Längsachse verschieblich gelagert. An ihrem freien Ende ist die Zahnstange 5 mit Spurstangen 6 über nicht dargestellte Kugelgelenke verbunden. Die Spurstangen 6 selbst sind in bekannter Weise über Achsschenkel mit je einem gelenkten Rad 7 des Kraftfahrzeugs verbunden. Eine Drehung des Lenkrades 2 führt über die Verbindung der Lenkwelle 3 und des Ritzels 4 zu einer Längsverschiebung der Zahnstange 5 und damit zu einer Verschwenkung der gelenkten Räder 7. Die gelenkten Räder 7 erfahren über eine Fahrbahn 70 eine Rückwirkung, die der Lenkbewegung entgegen wirkt. Zum Verschwenken der Räder 7 ist folglich eine Kraft erforderlich, die ein entsprechendes Drehmoment am Lenkrad 2 erforderlich macht. Ein Elektromotor 8, 18 mit einem Rotorlagensensor (RPS) einer Servoeinheit 9 ist vorgesehen, um dem Fahrer bei dieser Lenkbewegung zu unterstützen. Die Servoeinheit 9 kann dabei als Hilfskraftunterstützungseinrichtung 9, 10, 11 entweder mit einer Lenkwelle 3, dem Lenkritzel 4 oder der Zahnstange 5 gekoppelt sein. Die jeweilige Hilfskraftunterstützung 9,10,11 trägt ein Hilfskraftmoment in die Lenkwelle 3, das Lenkritzel 4 und/oder in die Zahnstange 5 ein, wodurch der Fahrer bei der Lenkarbeit unterstützt wird. Die drei unterschiedlichen in Figur 1 dargestellten Hilfskraftunterstützungen 9,10,11 zeigen alternative Positionen für deren Anordnung. Üblicherweise ist nur eine einzige der gezeigten Positionen mit einer Hilfskraftunterstützung belegt. Die Servoeinheit kann dabei als Überlagerungslenkung an der Lenksäule oder als Hilfskraftunterstützungseinrichtung an dem Ritzel 4 oder der Zahnstange 5 angeordnet sein.

Figur 2 zeigt eine Drehmomentsensoreinheit 12, die Teil einer integralen Baueinheit 13 ist, die eine Lenkwinkelsensoreinheit 14 umfasst. Die Drehmomentsensoreinheit 12 erfasst die Verdrehung der oberen Lenkwelle 30 gegenüber der unteren Lenkwelle 31 als ein Maß des an der oberen Lenkwelle 30 manuell ausgeübten Drehmomentes. Die Lenkwinkelsensoreinheit 14 hingegen misst den aktuellen Lenkwinkel der unteren Lenkwelle 31.

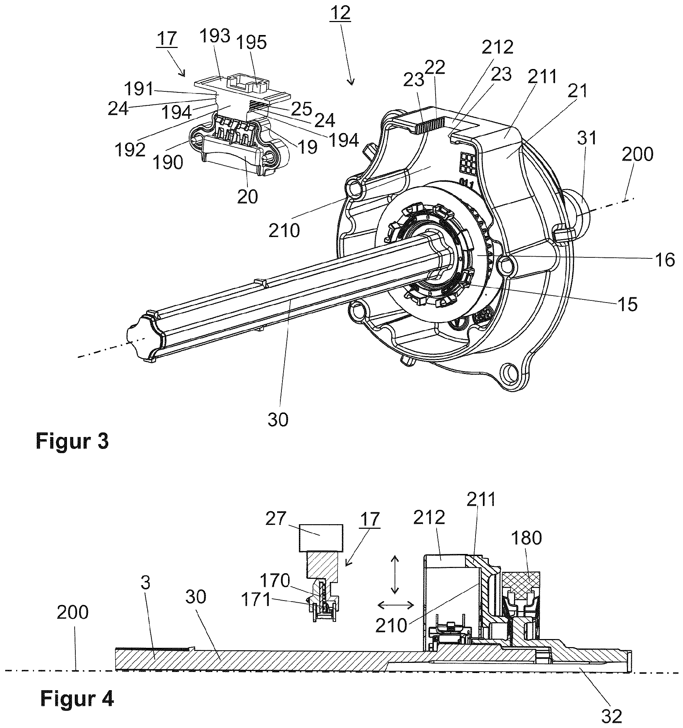

Die oberen Lenkwelle 30 und die unteren Lenkwelle 31 sind drehelastisch über einen, in Figur 4 gezeigten, Drehstab 32 miteinander gekoppelt. Die Verdrehung zwischen oberen Lenkwelle 30 und die unteren Lenkwelle 31 kann über einen Drehwinkelsensor ermittelt werden. Dieser Drehwinkelsensor wird auch als Drehmomentsensor bezeichnet. Die Drehmomentsensoreinheit 12 weist einen drehfest mit der oberen Lenkwelle 30 verbunden Ringmagneten (Permanentmagneten) 15 und einen Magnetflussleiter 16 auf. Eine dazugehörige Sensoreinheit 17 ist raumfest mit der Einheit des Elektromotors 18 verbunden. In Abhängigkeit des von der Drehmomentsensoreinheit 12 gemessen Drehmoments stellt die Servoeinheit 9 eine Lenkunterstützung für den Fahrer bereit.

In der Figur 2 ist weiterhin dargestellt, dass der Elektromotor oder ein Servomotor 18 mit einer nicht dargestellte Schneckenwelle über eine Motorwelle gekoppelt ist. Die Schneckenwelle steht die mit ihrer Schnecke in Eingriff mit einem Schneckenrad 180 steht, dass mit einem Ritzel oder, wie hier dargestellt, mit der unteren Lenkwelle 31 drehfest verbunden ist. Bei einem Betrieb des Elektromotors 18 wird die Schneckenwelle angetrieben und das Schneckenrad 180 dreht sich entsprechend um eine Drehunterstützung für die untere Lenkwelle 31 bereitzustellen.

In der Figur 3 ist eine einzelne Drehmomentsensoreinheit 12 mit Magnetsensor im Detail dargestellt. Die Sensoreinheit 17 weist ein erstes Gehäuse 19 auf und darin angeordnet einen Magnetflussleiter 20 und einen auf einer Leiterplatte 170 angeordneten Magnetsensor 171, wie in Figur 4 dargestellt. Die Flussleiter 16,20 dienen zur Konzentrierung des magnetischen Flusses an dem Magnetsensor. Der Magnetsensor 171 detektiert die Verdrehung der mit dem Magnetring 15 verbunden oberen Lenkwelle 30 gegenüber der mit dem Magnetflussleiter 16 verbundenen unteren Lenkwelle 31. Das erste Gehäuse 19 der Sensoreinheit 17 weist einen ersten Bereich 190 auf, in dem der Flussleiter 20, die Leiterplatte 170 und der Magnetsensor 171 untergebracht sind. Dieser erste Bereich 190 des ersten Gehäuses 19 ist im montierten Zustand von einem nicht dargestellten Gehäusedeckel verschlossen. In einem zweiten Bereich 191, der sich an den ersten Bereich 190 anschließt, ist das erste Gehäuse 19 T-förmig ausgestaltet. Zur Bildung der T-Form weist das erste Gehäuse 19 einen Hals 192 auf, der sich im montierten Zustand des Sensors in Radialrichtung der Längsachse 200 der Lenkwelle 3 erstreckt und an den sich ein querliegender Steg 193 anschließt. Der Hals 192 erweitert sich in Richtung des Steges 193, senkrecht zur Längsachse 200. Dazu weist der Hals 192 auf beiden Seiten einen Absatz 194 auf. Der querliegende Steg 193 ist plattenförmig. Er weist auf seiner dem Hals abgewandten Oberseite einen Vorsprung 195 in Form eines Randes auf, der auf dem Steg 193 angeordnete, nicht dargestellte Kontaktelemente umgibt. Der Vorsprung 195 bildet ein Steckelement, in das im montierten Zustand des Sensors ein Stecker eingesetzt wird, um den Sensor mit einer Datenleitung zu verbinden und an eine Stromversorgung anzuschließen.

Das erste Gehäuse 19 der Sensoreinheit 17 wird bei der Montage mittels eines Roboters in ein zweites Gehäuse 21 der Drehmomentsensoreinheit 12 eingesetzt. Das zweite Gehäuse 21 der Drehmomentsensoreinheit umgibt im montierten Zustand den Ringmagneten 15, den Flussleiter 16 und die Sensoreinheit 17. Das zweite Gehäuse 21 der Drehmomentsensoreinheit weist eine als Boden fungierende Grundfläche 210 auf, die von einem Rand 211 umfangseitig umgeben ist. Das zweite Gehäuse 21 wird von einem nicht dargestellten Gehäusedeckel abgedeckt. Das zweite Gehäuse 21 weist eine einseitig offene Gehäuseöffnung 212 im Rand 211 auf, in die die Sensoreinheit 17 eingesetzt wird. Zur Positionierung der Sensoreinheit 17 in der Gehäuseöffnung 212 weist die Gehäuseöffnung eine wellenförmige Profilierung 22 in Form von parallel angeordneten Rillen (Riffelung) an den Seitenflächen 23, die sich parallel zur Längsachse 200 der Lenkwelle erstrecken, auf. Die Rillen sind dabei in etwa senkrecht zur Längsachse 200 (Querriffelung) orientiert. Als Gegenstück ist auf den in Eingriff damit zubringenden Seiten 24 des Gehäusehalses 192 der Sensoreinheit 17 ebenfalls eine wellenförmige Profilierung 25 oberhalb der Absätze 194 vorgesehen, deren Rillen sich allerdings in Längsrichtung parallel zur Längsachse (Längsriffelung) erstrecken. Die beiden Profilierungen 22,25 sind somit bevorzugt um einen Winkel von etwa 90° gegeneinander verdreht angeordnet. Bei der Montage der Sensoreinheit 17 in dem zweiten Gehäuse 21 des Drehmomentsensors wird die Sensoreinheit 17 in die Gehäuseöffnung 212 gepresst. Vorzugsweise weist das Material eines mit Profilierung versehenden Seitenpaares 23,24 eine höhere Zähigkeit als das Material des anderen Seitenpaares 23,24 auf. Während des Verpressens wird dann die Riffelung des Seitenpaares, das aus einem Material mit höherer Zähigkeit hergestellt ist, in die überlappende Riffelung des anderen Seitenpaares kraftschlüssig eingepresst. Im montierten Zustand liegt die Unterseite des Stegs 193 des ersten Gehäuses 19der Sensoreinheit 17 auf der Außenseite des Randes 211 des zweiten Gehäuses 21 des Drehmomentsensors auf. Der Hals 192 des ersten Gehäuses 19 der Sensoreinheit 17 durchsetzt dabei die Gehäuseöffnung 212.

Die Sensoreinheit 17 wird von einem sensitiven Roboter 27 mit einer Pressachse ausgerichtet und in dem zweiten Gehäuse 21 des Drehmomentsensors positioniert.

In den Figuren 4 bis 9 ist das Montageverfahren dargestellt. In einem ersten Montageschritt (Figur 4) wird die Sensoreinheit 17 in einem vordefinierten Abstand zur Lenkwelle 3 ausgerichtet und entlang der Längsachse 200 in die Gehäuseöffnung 212 des zweiten Gehäuses 21 des Drehmomentsensors eingebracht. Die Pfeile deuten die Bewegungsrichtung an. Die Sensoreinheit 17 durchsetzt dabei mit ihrem Hals 192 unterhalb des Absatzes 194 die Gehäuseöffnung 212. Der Hals 192 ist dabei unterhalb des Absatzes 194 im Durchmesser kleiner als die Gehäuseöffnung 212, so dass die Sensoreinheit 17 in diesem ersten Schritt das zweite Gehäuse 21 des Drehmomentsensors nicht berührt.

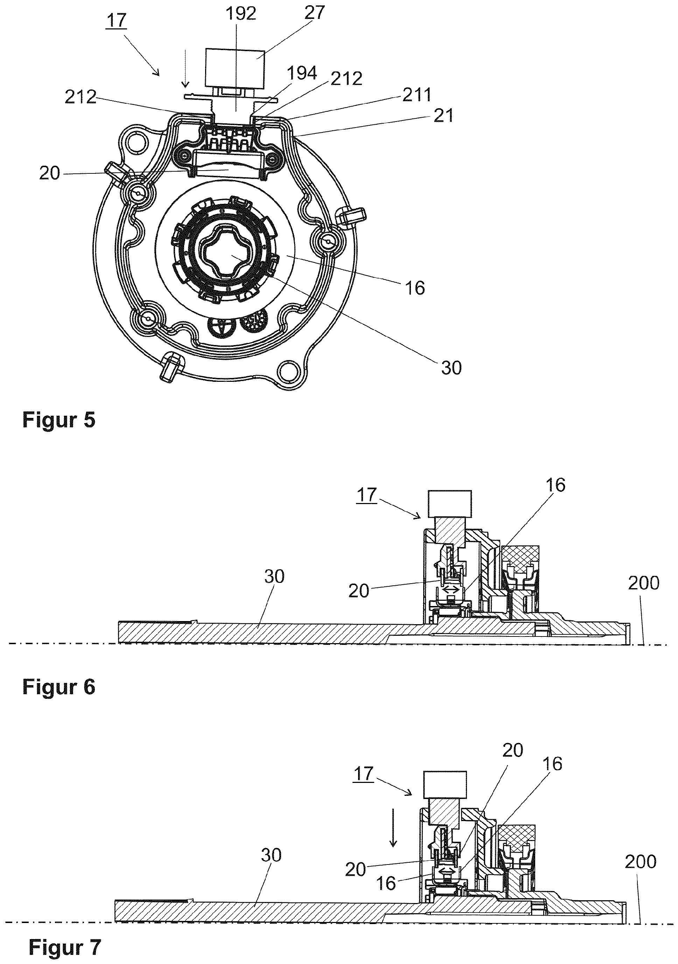

Wie in Figur 5 dargestellt ist, wird die Sensoreinheit 17 in einem zweiten Montageschritt an das zweite Gehäuse 21 des Drehmomentsensors mit einer vordefinierten Kraft gedrückt, so dass die Sensoreinheit 17 am Hals 192 im Bereich des Absatzes 194 in Anlage mit dem Rand 211 des zweiten Gehäuses 21 des Drehmomentsensors 12 kommt. Das erste Gehäuse 19 der Sensoreinheit 17 ist dabei so ausgestaltet, dass der Magnetflussleiter 20 der Sensoreinheit 17 zwischen den mit der unteren Lenkwelle 31 verbundenen Magnetflussleiter 16 greift. Der Magnetflussleiter 20 der Sensoreinheit 17 ist dabei im Profil entlang der Längsachse 200 H-Förmig ausgestaltet, wobei die beiden Querelemente zwischen die Ringe des im Profil entlang der Längsachse U-Förmig ausgestalteten Magnetflussleiter 16 greifen. Dieser Zustand ist z.B. in Figur 6 dargestellt.

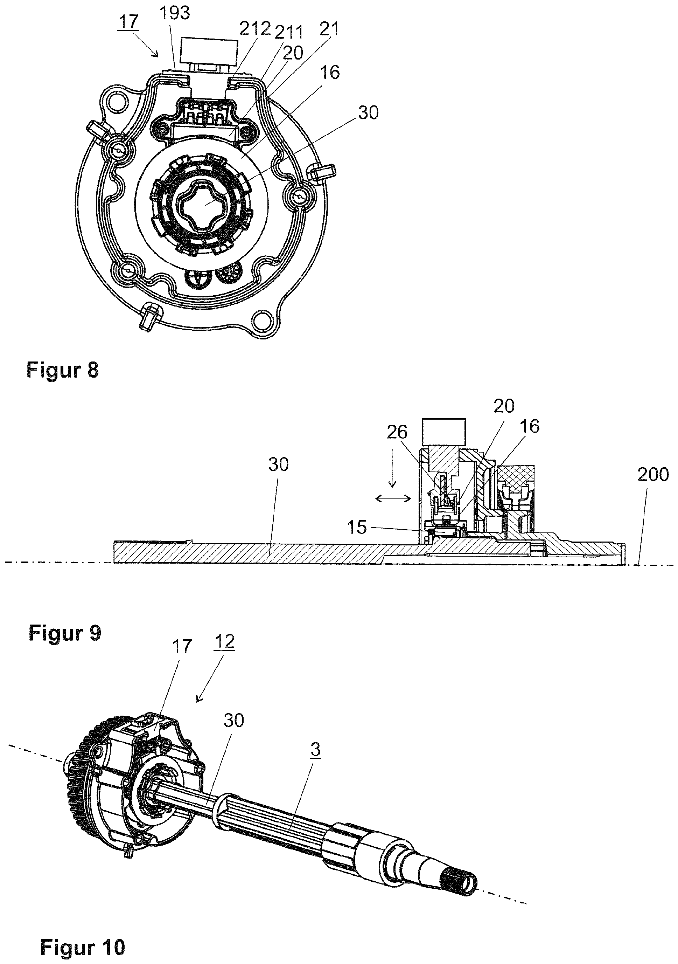

In einem weiteren Montageschritt wird die Sensoreinheit 17, wie in den Figuren 6 und 7 in einem Längsschnitt dargestellt, entlang der Längsachse 200 verschoben und zwar derart, dass die Sensoreinheit 17 mittig zu dem mit der unteren Lenkwelle 31 verbundenen Magnetflussleiter 16 angeordnet ist. Dazu wird die Sensoreinheit 17 als erstes in die beiden, in den Figuren 6 und 7 dargestellten Endpositionen verfahren, in denen jeweils eine der Außenseiten des Magnetflussleiters 20 der Sensoreinheit an die Innenseite des mit der unteren Lenkwelle 31 verbundenen Magnetflussleiters 16 in Anlage gebracht wird und danach eine anhand der Grenzpositionen ermittelte Mittenposition eingenommen wird. Daraufhin wird die Sensoreinheit 17 in die Gehäuseöffnung 212 eingepresst, bis die Unterseite des Steges 193 in Anlage mit der Außenseite des Randes 211 des zweiten Gehäuses 21 des Drehmomentsensors kommt. Dieser Montagezustand ist in den Figuren 8 und 9 gezeigt. Die Magnetflussleiter 16,20 sind so zueinander ausgerichtet, dass der Magnetfeldsensor 26 mittig zu dem Ringmagneten 15 angeordnet ist. Die Magnetflussleiter 16,20 überlappen sich im eingepressten Zustand in Radialrichtung deutlich, so dass die Sensoreinheit 17 die Bewegung des Ringmagnetes 15 gegenüber dem Magnetflussleiter 16 detektieren kann.

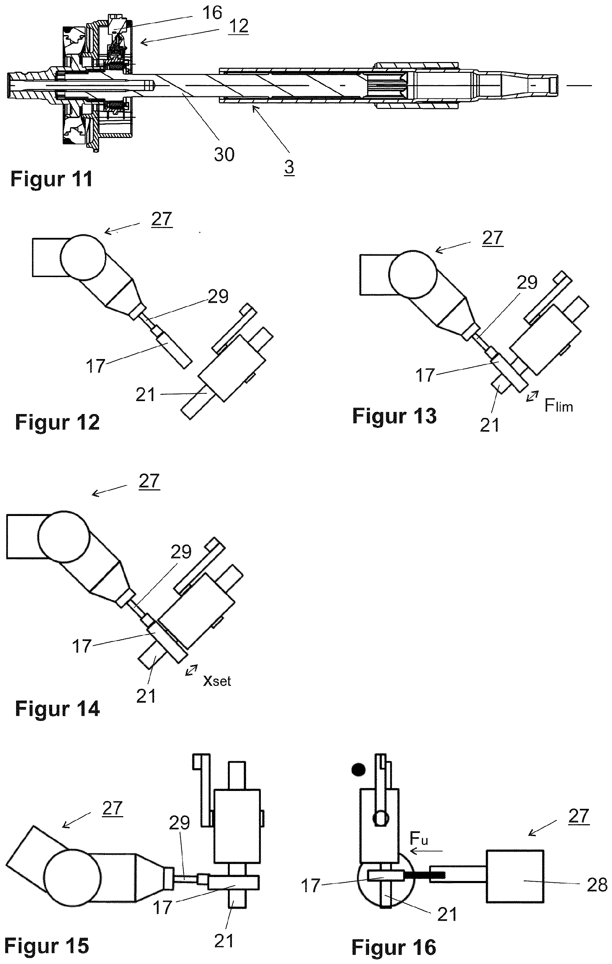

In der Figur 10 ist die auf der Lenkwelle 3 angeordnete Drehmomentsensoreinheit 12 mit montierter Sensoreinheit 17 dargestellt. Figur 11 zeigt einen entsprechenden Längsschnitt durch die Anordnung.

Die zuvor beschriebene Montage der Drehmomentsensoreinheit 12 mittels Roboter 27 ist in den Figuren 12 bis 16 dargestellt.

Der Roboter 27 weist einen mehrachsigen Manipulator auf, welcher beispielsweise in Form eines mehrachsigen Gelenkarmrotbors ausgebildet sein kann. Die Bewegung der einzelnen Achsen des Manipulators kann dabei durch eine gezielte Regelung von Antrieben erfolgen, welche mit den einzelnen Komponenten des Manipulators verbunden sind. Vorzugsweise ist der Roboter sensitiv und hat wenigstens eine Sensorvorrichtung integriert, die dazu eingerichtet ist, Kräfte und Wege zu messen. Der mehrachsige Manipulator hat eine Pressachse 28. Der Roboter 27 weist einen Greifarm 29 auf, der um eine erste Schwenkachse verschenkbar ist. Wie in Figur 12 dargestellt ist, greift der Greifarm 29 die Sensoreinheit 17 und positioniert diese in der Gehäuseöffnung des zweiten Gehäuses 21 der Drehmomentsensoreinheit mit einer maximal zulässigen Kraft Fₗᵢₘ (Figur 13). Die Mittenposition zwischen dem nicht dargestellten Magnetflussleiters entlang der Längsachse wird durch Erkennen der Grenzpositionen und Berechnen eines vordefinierten Abstands xₛₑₜ eingenommen (Figur 14).

In den Figuren 15 und 16 ist dargestellt, wie die Pressachse des Roboters 28 die Sensoreinheit 17 greift und in das zweite Gehäuse 21 mit einer vordefinierten Kraft Fᵤ einpresst.

Die Verwendung des Roboters erlaubt den Fügeprozess vollkommen zu automatisieren, wodurch dieser besonders kostengünstig erfolgen kann.

## Patentansprüche

1. Drehmomentsensoreinheit (12) umfassend:
- einen drehfest mit einer ersten Teilwelle (30) verbindbaren Ringmagneten (15) und einen mit einer zweiten Teilwelle (31) verbindbaren Magnetflussleiter (16),
- eine Sensoreinheit (17) mit einem ersten Gehäuse (19), wobei die Sensoreinheit (17) eine Drehwinkeländerung zwischen den Teilwellen (30,31) detektiert,
- ein zweites Gehäuse (21), dass den Ringmagneten (15) und den Magnetflussleiter (16) umgibt, und das mit dem ersten Gehäuse (19) der Sensoreinheit (17) fest verbunden ist, **dadurch gekennzeichnet, dass** das zweite Gehäuse (21) der Drehmomentsensoreinheit eine Gehäuseöffnung (212) aufweist, in die das erste Gehäuse (19) der Sensoreinheit (17) zur Ausbildung einer kraftschlüssigen Verbindung eingepresst ist, wobei die Gehäuseöffnung (212) eine erste Profilierung (22) an wenigstens zwei Seitenflächen (23) aufweist.

2. Drehmomentsensoreinheit nach Anspruch 1, **dadurch gekennzeichnet, dass** die Sensoreinheit (17) einen Magnetflussleiter (20) und einen auf einer Leiterplatte (170) angeordneten Magnetsensor (171) umfasst.

3. Drehmomentsensoreinheit nach Anspruch 1 oder Anspruch 2, **dadurch gekennzeichnet, dass** die wenigstens zwei Seitenflächen (23) sich gegenüber liegen und sich parallel zur Längsachse (200) der Teilwellen (30, 31) erstrecken.

4. Drehmomentsensoreinheit nach einem der vorhergehenden Ansprüche, **dadurch gekennzeichnet, dass** das erste Gehäuse (19) der Sensoreinheit (17) eine auf den wenigstens zwei Seitenflächen (23) der Gehäuseöffnung (212) korrespondierenden Außenflächen (24) angeordnete zweite Profilierung (25) aufweist.

5. Drehmomentsensoreinheit nach Anspruch 4, **dadurch gekennzeichnet, dass** die erste und zweite Profilierung (22,25) bevorzugt um einen Winkel von etwa 90° gegeneinander verdreht angeordnet sind.

6. Drehmomentsensoreinheit nach Anspruch 4 oder Anspruch 5, **dadurch gekennzeichnet, dass** die Profilierungen (22,25) parallel angeordnete Rillen aufweisen.

7. Drehmomentsensoreinheit nach einem der Ansprüche 4 bis 6, **dadurch gekennzeichnet, dass** das Material, in das eine der beiden Profilierungen (22,25) eingebracht wurde, eine höhere Zähigkeit aufweist, als das Material, in das die andere der beiden Profilierungen (22,25) eingebracht wurde.

8. Drehmomentsensoreinheit nach einem der vorhergehenden Ansprüche 4 bis 7, **dadurch gekennzeichnet, dass** im eingepressten Zustand die Profilierungen (22,25) zur Ausbildung der kraftschlüssigen Verbindung ineinandergreifen.

9. Drehmomentsensoreinheit nach einem der vorhergehenden Ansprüche, **dadurch gekennzeichnet, dass** das erste Gehäuse (19) der Sensoreinheit (17) einen T-förmigen Bereich (191) mit einem Hals (192) und einem dazu senkrecht angeordneten Steg (193) aufweist.

10. Drehmomentsensoreinheit nach Anspruch 9, **dadurch gekennzeichnet, dass** der Steg (193) im eingepressten Zustand in Anlage mit einer Außenseite des zweiten Gehäuses (21) der Drehmomentsensoreinheit (12) liegt und die Einpresstiefe begrenzt.

11. Drehmomentsensoreinheit nach Anspruch 9 oder 10, **dadurch gekennzeichnet, dass** der Hals (192) des ersten Gehäuses (19) der Sensoreinheit (17) sich zum Steg (193) hin erweitert und in dem erweiterten Bereich die zweite Profilierung (25) auf den wenigstens zwei Seitenflächen (23) der Gehäuseöffnung (212) aufgebracht ist.

12. Elektromechanisches Lenksystem für ein Kraftfahrzeug umfassend ein mit einer ersten Teilwelle (31) verbundenes Lenkritzel (4), welches mit einer in einem dritten Gehäuse entlang einer Längsachse verschieblich gelagerten Zahnstange (5) zur Lenkung von Rädern (7) in Eingriff steht, wenigstens einen Elektromotor (8) zur Lenkkraftunterstützung, eine Drehmomentsensoreinheit (12) gemäß einem der vorhergehenden Ansprüche, die zwischen einer mit dem Lenkrad verbundenen zweiten Teilwelle (30) und der ersten Teilwelle (31) angeordnet ist und ein vom Fahrer in das Lenkrad eingebrachtes Drehmoment erfasst.

13. Verfahren zur Montage einer Drehmomentsensoreinheit (12) nach einem der Ansprüche 1 bis 11 für eine elektromechanische Hilfskraftlenkung umfassend:
- einen drehfest mit einer ersten Teilwelle (30) verbundenen Ringmagneten (15) und einen mit einer zweiten Teilwelle (31) verbundenen Magnetflussleiter (16), wobei die zwei sich axial gegenüberliegenden Teilwellen (30,31) über einen Drehstab miteinander verbunden sind,
- eine Sensoreinheit (17) mit einem ersten Gehäuse (19), wobei die Sensoreinheit (17) eine Drehwinkeländerung zwischen den Teilwellen (30,31) detektiert,
- ein zweites Gehäuse (21), dass den Ringmagneten (15) und den Magnetflussleiter (16) umgibt, wobei folgende Schritte vorgesehen sind:
- Positionieren der Sensoreinheit (17) in einer Gehäuseöffnung (212) des zweiten Gehäuses (21) der Drehmomentsensoreinheit (12),
- Einpressen der Sensoreinheit (17) in die Gehäuseöffnung (212) zur Ausbildung einer kraftschlüssigen Verbindung.

14. Verfahren nach Anspruch 13, **dadurch gekennzeichnet, dass** das Positionieren folgende Schritte umfasst:
- Einbringen der Sensoreinheit (17) in die Gehäuseöffnung (212),
- Absenken der Sensoreinheit (17) in der Gehäuseöffnung (212) bis die Sensoreinheit (17) an der Gehäuseöffnung (212) anliegt und in den Magnetflussleiter (16) greift,
- Verfahren der Sensoreinheit (17) in der Gehäuseöffnung (212) zwischen zwei durch den Magnetflussleiter (16) gebildeten Begrenzungen zur Bestimmung einer Mittenposition,
- Verfahren der Sensoreinheit (17) in der Gehäuseöffnung (212) zur Mittenposition.

15. Verfahren nach Anspruch 13 oder Anspruch 14, **dadurch gekennzeichnet, dass** die Drehmomentsensoranordnung (12) an einer Lenkwelle (3) in einem Kraftfahrzeug angebracht ist und an zwei sich axial gegenüberliegenden Teilwellen (30,31) der Lenkwelle befestigt ist und eine Drehwinkeländerung zwischen den Teilwellen (30,31) erfasst.

## Claims

1. A torque sensor unit (12) comprising:
- a ring magnet (15) which can be connected to a first partial shaft (30) for conjoint rotation and a magnetic flux conductor (16) which can be connected to a second partial shaft (31),
- a sensor unit (17) having a first housing (19), wherein the sensor unit (17) detects a change in rotational angle between the partial shafts (30, 31),
- a second housing (21), which surrounds the ring magnet (15) and the magnetic flux conductor (16) and is fixedly connected to the first housing (19) of the sensor unit (17), **characterized in that** the second housing (21) of the torque sensor unit has a housing opening (212) into which the first housing (19) of the sensor unit (17) is pressed to form a frictional connection, wherein the housing opening (212) has a first profile (22) on at least two side faces (23).

2. The torque sensor unit as claimed in claim 1, **characterized in that** the sensor unit (17) comprises a magnetic flux conductor (20) and a magnetic sensor (171) arranged on a printed circuit board (170).

3. The torque sensor unit as claimed in claim 1 or claim 2, **characterized in that** the at least two side faces (23) are located opposite each other and extend parallel to the longitudinal axis (200) of the partial shafts (30, 31).

4. The torque sensor unit as claimed in one of the preceding claims, **characterized in that** the first housing (19) of the sensor unit (17) has a second profile (25) arranged on outer faces (24) corresponding to the at least two side faces (23) of the housing opening (212).

5. The torque sensor unit as claimed in claim 4, **characterized in that** the first and second profile (22, 25) are rotated preferably by an angle of about 90° relative to each other.

6. The torque sensor unit as claimed in claim 4 or claim 5, **characterized in that** the profiles (22, 25) have grooves arranged in parallel.

7. The torque sensor unit as claimed in one of the preceding claims 4 to 6, **characterized in that** the material into which one of the two profiles (22, 25) has been introduced has a higher ductility than the material into which the other of the two profiles (22, 25) has been introduced.

8. The torque sensor unit as claimed in one of the preceding claims 4 to 7, **characterized in that** when they are pressed in, the profiles (22, 25) interengage to form the frictional connection.

9. The torque sensor unit as claimed in one of the preceding claims, **characterized in that** the first housing (19) of the sensor unit (17) has a T-shaped region (191) with a neck (192) and a crosspiece (193) arranged perpendicular thereto.

10. The torque sensor unit as claimed in claim 9, **characterized in that** the crosspiece (193) is in contact with an outer side of the second housing (21) of the torque sensor unit (12) when pressed in and delimits the pressing-in depth.

11. The torque sensor unit as claimed in claim 9 or 10, **characterized in that** the neck (192) of the first housing (19) of the sensor unit (17) widens towards the crosspiece (193), and the second profile (25) is applied to the at least two side faces (23) of the housing opening (212) in the widened region.

12. An electromechanical steering system for a motor vehicle comprising a steering pinion (4) which is connected to a first partial shaft (31) and which meshes with a rack (5) for steering wheels (7), wherein the rack is mounted in a third housing and can be displaced along a longitudinal axis, at least one electric motor (8) for steering force assistance, a torque sensor unit (12) as claimed in one of the preceding claims, which is arranged between a second partial shaft (30) connected to the steering wheel and the first partial shaft (31) and detects a torque introduced into the steering wheel by the driver.

13. A method for assembling a torque sensor unit (12) as claimed in one of the preceding claims 1 to 11 for an electromechanical power steering system, comprising:
- a ring magnet (15) connected to a first partial shaft (30) for conjoint rotation and a magnetic flux conductor (16) connected to a second partial shaft (31), wherein the two axially opposite partial shafts (30, 31) are connected to each other via a torsion bar,
- a sensor unit (17) having a first housing (19), wherein the sensor unit (17) detects a change in rotational angle between the partial shafts (30, 31),
- a second housing (21), which surrounds the ring magnet (15) and the magnetic flux conductor (16), wherein the following steps are provided:
- positioning the sensor unit (17) in a housing opening (212) of the second housing (21) of the torque sensor unit (12),
- pressing the sensor unit (17) into the housing opening (212) to form a frictional connection.

14. The method as claimed in claim 13, **characterized in that** the positioning comprises the following steps:
- introducing the sensor unit (17) into the housing opening (212),
- lowering the sensor unit (17) into the housing opening (212) until the sensor unit (17) lies against the housing opening (212) and reaches into the magnetic flux conductor (16),
- moving the sensor unit (17) in the housing opening (212) between two limits formed by the magnetic flux conductor (16) to determine a central position,
- moving the sensor unit (17) in the housing opening (212) to the central position.

15. The method as claimed in claim 13 or 14, **characterized in that** the torque sensor assembly (12) is attached to a steering shaft (3) in a motor vehicle and fixed to two axially opposite partial shafts (30, 31) of the steering shaft and detects a change in rotational angle between the partial shafts (30, 31).

## Revendications

1. Unité de capteur de couple (12) comprenant :
- un aimant annulaire (15) pouvant être relié de manière solidaire en rotation à un premier arbre partiel (30) et un conducteur de flux magnétique (16) pouvant être relié à un deuxième arbre partiel (31),
- une unité de capteur (17) avec un premier boîtier (19), l'unité de capteur (17) détectant une variation d'angle de rotation entre les arbres partiels (30, 31),
- un deuxième boîtier (21) qui entoure l'aimant annulaire (15) et le conducteur de flux magnétique (16) et qui est relié de manière fixe au premier boîtier (19) de l'unité de capteur (17), **caractérisée en ce que** le deuxième boîtier (21) de l'unité de capteur de couple présente une ouverture de boîtier (212) dans laquelle le premier boîtier (19) de l'unité de capteur (17) est enfoncé pour former une liaison par adhérence, l'ouverture de boîtier (212) présentant un premier profilage (22) sur au moins deux surfaces latérales (23).

2. Unité de capteur de couple selon la revendication 1, **caractérisée en ce que** l'unité de capteur (17) comprend un conducteur de flux magnétique (20) et un capteur magnétique (171) agencé sur une carte de circuit imprimé (170).

3. Unité de capteur de couple selon la revendication 1 ou la revendication 2, **caractérisée en ce que** les au moins deux surfaces latérales (23) sont opposées et s'étendent parallèlement à l'axe longitudinal (200) des arbres partiels (30, 31).

4. Unité de capteur de couple selon l'une quelconque des revendications précédentes, **caractérisée en ce que** le premier boîtier (19) de l'unité de capteur (17) présente un deuxième profilage (25) agencé sur les surfaces extérieures (24) correspondant à au moins deux surfaces latérales (23) de l'ouverture de boîtier (212).

5. Unité de capteur de couple selon la revendication 4, **caractérisée en ce que** le premier et le deuxième profilage (22, 25) sont agencés de préférence en étant tournés l'un par rapport à l'autre d'un angle d'environ 90°.

6. Unité de capteur de couple selon la revendication 4 ou la revendication 5, **caractérisée en ce que** les profilages (22, 25) présentent des rainures agencées parallèlement.

7. Unité de capteur de couple selon l'une quelconque des revendications 4 à 6, **caractérisée en ce que** le matériau dans lequel l'un des deux profilage (22, 25) a été pratiqué présente une plus grande ténacité que le matériau dans lequel l'autre des deux profilages (22, 25) a été pratiqué.

8. Unité de capteur de couple selon l'une quelconque des revendications précédentes 4 à 7, **caractérisée en ce qu'**à l'état enfoncé, les profilages (22, 25) s'engagent l'un dans l'autre pour former la liaison par adhérence.

9. Unité de capteur de couple selon l'une quelconque des revendications précédentes, **caractérisée en ce que** le premier boîtier (19) de l'unité de capteur (17) présente une zone en forme de T (191) avec un col (192) et une barrette (193) agencée perpendiculairement à celui-ci.

10. Unité de capteur de couple selon la revendication 9, **caractérisée en ce que** la barrette (193), à l'état enfoncé, est en appui contre un côté extérieur du deuxième boîtier (21) de l'unité de capteur de couple (12) et limite la profondeur d'enfoncement.

11. Unité de capteur de couple selon la revendication 9 ou 10, **caractérisée en ce que** le col (192) du premier boîtier (19) de l'unité de capteur (17) s'élargit vers la barrette (193) et, dans la zone élargie, le deuxième profilage (25) est appliqué sur les au moins deux surfaces latérales (23) de l'ouverture de boîtier (212).

12. Système de direction électromécanique pour un véhicule automobile comprenant un pignon de direction (4) relié à un premier arbre partiel (31), qui est en prise avec une crémaillère (5) montée dans un troisième boîtier de manière coulissante le long d'un axe longitudinal pour la direction de roues (7), au moins un moteur électrique (8) pour l'assistance de direction, une unité de capteur de couple (12) selon l'une quelconque des revendications précédentes, qui est agencée entre un deuxième arbre partiel (30) relié au volant de direction et le premier arbre partiel (31) et qui détecte un couple appliqué par le conducteur au volant de direction.

13. Procédé de montage d'une unité de capteur de couple (12) selon l'une quelconque des revendications 1 à 11 pour une direction assistée électromécanique comprenant :
- un aimant annulaire (15) relié de manière solidaire en rotation à un premier arbre partiel (30) et un conducteur de flux magnétique (16) relié à un deuxième arbre partiel (31), les deux arbres partiels (30, 31) axialement opposés étant reliés entre eux par l'intermédiaire d'une barre de torsion,
- une unité de capteur (17) avec un premier boîtier (19), l'unité de capteur (17) détectant une variation d'angle de rotation entre les arbres partiels (30, 31),
- un deuxième boîtier (21) qui entoure l'aimant annulaire (15) et le conducteur de flux magnétique (16), les étapes suivantes étant prévues :
- le positionnement de l'unité de capteur (17) dans une ouverture de boîtier (212) du deuxième boîtier (21) de l'unité de capteur de couple (12),
- l'enfoncement de l'unité de capteur (17) dans l'ouverture de boîtier (212) pour former une liaison par adhérence.

14. Procédé selon la revendication 13, **caractérisé en ce que** le positionnement comprend les étapes suivantes :
- l'introduction de l'unité de capteur (17) dans l'ouverture de boîtier (212),
- l'abaissement de l'unité de capteur (17) dans l'ouverture de boîtier (212) jusqu'à ce que l'unité de capteur (17) s'applique sur l'ouverture de boîtier (212) et s'engage dans le conducteur de flux magnétique (16),
- le déplacement de l'unité de capteur (17) dans l'ouverture de boîtier (212) entre deux limites formées par le conducteur de flux magnétique (16) pour déterminer une position centrale,
- le déplacement de l'unité de capteur (17) dans l'ouverture de boîtier (212) vers la position centrale.

15. Procédé selon la revendication 13 ou la revendication 14, **caractérisé en ce que** l'agencement de capteur de couple (12) est disposé sur un arbre de direction (3) dans un véhicule automobile et est fixé à deux arbres partiels (30, 31) axialement opposés de l'arbre de direction et détecte une variation d'angle de rotation entre les arbres partiels (30, 31).
